(19) **Europäisches Patentamt / European Patent Office / Office européen des brevets**

(11) **EP 3 868 658 B1**

(12) # FASCICULE DE BREVET EUROPEEN

(45) Date de publication et mention de la délivrance du brevet:
**06.07.2022 Bulletin 2022/27**

(21) Numéro de dépôt: **20209983.4**

(22) Date de dépôt: **26.11.2020**

(51) Classification Internationale des Brevets (IPC):
*B64C 27/24* (2006.01)   *B64C 27/06* (2006.01)
*B64C 13/18* (2006.01)   *B64C 11/40* (2006.01)
*G05D 1/08* (2006.01)   *B64D 31/06* (2006.01)
*B64C 27/00* (2006.01)

(52) Classification Coopérative des Brevets (CPC):
**B64C 13/18; B64C 11/40; B64C 27/006; B64C 27/24; B64D 31/06; G05D 1/0072; G05D 1/0858**

(54) **PROCEDE DE COMMANDE D'UN HELICOPTERE HYBRIDE LORS D'UNE PANNE D'UNE INSTALLATION MOTRICE**

VERFAHREN ZUR STEUERUNG EINES HYBRID-HELIKOPTERS IM FALLE EINES AUSFALLS EINER ANTRIEBSANLAGE

METHOD FOR CONTROLLING A HYBRID HELICOPTER DURING FAILURE OF A DRIVE SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.02.2020 FR 2001581**

(43) Date de publication de la demande:
**25.08.2021 Bulletin 2021/34**

(73) Titulaire: **Airbus Helicopters**
**13725 Marignane Cedex (FR)**

(72) Inventeurs:
• **EGLIN, Paul**
**13830 ROQUEFORT LA BEDOULE (FR)**

• **HUOT, Rémy**
**13008 MARSEILLE (FR)**
• **CONROY, Antoine**
**13127 VITROLLES (FR)**

(74) Mandataire: **GPI Brevets**
**1330, rue Guillibert de la Lauzière**
**EuroParc de Pichaury**
**Bât B2**
**13856 Aix en Provence Cedex 3 (FR)**

(56) Documents cités:
**EP-A1- 2 148 066    EP-A1- 3 201 085**
**US-A- 3 540 680    US-A1- 2006 269 413**

EP 3 868 658 B1

**Description**

La présente invention concerne un procédé de commande d'un hélicoptère hybride lors d'une panne de chaque moteur d'une installation motrice transmettant une puissance à un rotor de sustentation et à au moins une hélice. La présente invention concerne aussi un hélicoptère hybride appliquant ce procédé. L'invention se situe dans le domaine technique des systèmes de secours activés en cas de panne moteur.

Le projet menant à cette invention a reçu un financement du programme de recherche et d'innovation Horizon 2020 de l'Union européenne, dans le cadre de la convention de subvention CleanSky 2 N° « GAM-FRC-2014-001 Issue E.

Un giravion est un aéronef dont la sustentation est assurée totalement ou partiellement par au moins une voilure tournante.

Un type de giravion est dénommé « hélicoptère hybride » par commodité en raison de sa spécificité, à savoir en raison de la présence d'au moins un rotor et d'au moins une hélice. Un hélicoptère hybride comporte un fuselage portant au moins une voilure tournante munie d'un rotor, ce rotor étant dénommé « rotor de sustentation » par la suite par commodité et en raison d'au moins une de ses fonctions. Le rotor de sustentation participe au moins à la sustentation de l'aéronef, voire à son avancement.

Un hélicoptère hybride comprend de plus au moins une hélice, possiblement de type hélice tractive ou propulsive. Par exemple, un hélicoptère hybride peut être pourvu de deux hélices agencées transversalement de part et d'autre du fuselage ou d'une seule hélice.

L'hélicoptère hybride comporte une installation motrice transmettant une puissance motrice au rotor de sustentation ainsi qu'à la ou aux hélices afin de les entraîner en rotation durant des phases de vol normales. Cette installation motrice comprend au moins un moteur et un système mécanique d'interconnexion entre le rotor de sustentation et la ou les hélices. Un tel système mécanique d'interconnexion peut comprendre au moins une boîte de transmission de puissance principale, une boîte de transmission de puissance latérale par hélice, des arbres de connexion, des organes de connexion...

Pour piloter un hélicoptère hybride, un pilote de l'hélicoptère hybride peut manoeuvrer une première commande et une deuxième commande pour contrôler respectivement collectivement et cycliquement le pas des pales du rotor de sustentation. La première commande est dénommée par commodité « commande de pas collectif » et prend souvent la forme d'un levier dit « levier de pas collectif ». La deuxième commande est dénommée par commodité « commande de pas cyclique » et prend souvent la forme d'un manche dit « manche cyclique ». De plus, l'hélicoptère hybride inclut au moins une commande de la poussée apte à modifier collectivement et d'une même quantité le pas des pales de la ou des hélices. Des fonctions de contrôle de direction notamment en lacet peuvent être réalisées par l'utilisation d'une commande de lacet. Sur un hélicoptère hybride comprenant plusieurs hélices, la commande de lacet peut agir sur le pas des pales des hélices afin de modifier différemment les poussées exercées par les hélices.

Par ailleurs, l'hélicoptère hybride peut comporter un système de pilotage automatique. Un tel système de pilotage automatique peut comprendre des actionneurs reliés mécaniquement aux diverses pales et un calculateur de pilotage automatique. Le calculateur de pilotage automatique peut transmettre des ordres aux actionneurs pour piloter automatiquement les pas des pales du rotor de sustentation et des hélices. Ces actionneurs peuvent être aussi bien agencés dans le cadre d'une architecture à commandes de vol mécaniques que dans le cadre d'une architecture à commandes de vol électriques par exemple.

Sur un hélicoptère traditionnel muni d'un rotor de sustentation et d'un rotor arrière, lorsque tous les moteurs de l'installation motrice sont en panne alors le pilote manoeuvre les commandes de vol pour placer l'aéronef dans une phase de vol en autorotation. Une phase de vol en autorotation correspond à une phase de vol particulière dans laquelle l'aéronef suit une trajectoire descendante sans puissance motrice générée par les moteurs. Dans ce cas, la rotation du rotor de sustentation est entretenue par le flux d'air traversant le rotor de sustentation ce qui permet à l'aéronef de rester manoeuvrable. La phase de vol en autorotation permet d'atterrir en sécurité. A cet effet, l'entrée en phase de vol en autorotation doit être faite dans un délai très court par le pilote en baissant le pas collectif des pales du rotor de sustentation à l'aide de la commande de pas collectif précitée. Sans action rapide du pilote, la vitesse de rotation du rotor de sustentation de l'aéronef décroit très rapidement jusqu'au décrochage de ce rotor de sustentation.

Sur un hélicoptère hybride, la situation est de fait différente en raison de la présence de la ou des hélices.

Selon l'enseignement du document FR 2946315, en cas d'autorotation du rotor de sustentation, et donc suite à la baisse du pas collectif des pales du rotor de sustentation, le pas moyen des hélices est placé sur requête du pilote à une valeur de pas calculée particulière. Cette valeur de pas calculée particulière peut être établie pour que les hélices assurent uniquement une fonction anticouple en consommant un minimum de puissance pour maintenir le rotor de sustentation à une vitesse de rotation acceptable.

Dès lors, en présence d'une panne de tous les moteurs, le pilote baisse le pas collectif des pales du rotor de sustentation puis actionne une commande afin que le pas moyen des hélices soit forcé à une valeur particulière. Cette procédure est intéressante en permettant de diminuer la forte consommation de puissance de la ou des hélices. De plus, le pas collectif des pales du rotor de sustentation est ajusté par le pilote pour maintenir la vitesse de rotation du rotor de sustentation dans un régime d'utilisation acceptable.

Selon un aspect, la baisse du pas collectif des pales du rotor de sustentation d'un hélicoptère hybride peut tendre à générer des vibrations et/ou des charges aérodynamiques élevées sur le rotor de sustentation lorsque l'aéronef évolue à haute vitesse.

Le document US 2016/0083076 décrit un aéronef ayant au moins un rotor de sustentation et une hélice. Selon ce document US 2016/0083076, suite à une panne d'un moteur le pas collectif des pales du rotor de sustentation tend à être réduit rapidement. Un capteur transmet, en cas de panne du moteur, un signal à un contrôleur de vol qui réduit alors le pas des pales de l'hélice. Si un pilote n'outrepasse pas cette réduction du pas des pales de l'hélice, le contrôleur de vol réduit le pas des pales de l'hélice jusqu'à un niveau qui est fonction des conditions du vol.

Le document EP 3201085 décrit un giravion comprenant deux rotors principaux coaxiaux. Une hélice est située à l'arrière du giravion. Dans ce document, lorsque l'avion est en autorotation, la puissance générée par l'hélice entraîne la rotation de l'ensemble rotor principal via la boîte de vitesses.

Le document US 3540680 décrit un giravion muni d'un rotor principal. De plus, le giravion comporte une paire de rotors arrière comprenant une hélice.

Les documents US 2006/269413 et EP 2148066 sont aussi connus.

La présente invention a alors pour objet de proposer un procédé tendant à limiter les vibrations et/ou les charges aérodynamiques exercées sur le rotor de sustentation en cas de panne totale de l'installation motrice.

L'invention vise ainsi un procédé de contrôle d'un hélicoptère hybride, cet hélicoptère hybride ayant une installation motrice reliée à au moins un rotor de sustentation et à au moins une hélice, l'installation motrice ayant au moins un moteur, le rotor de sustentation ayant une pluralité de premières pales et ladite au moins une hélice ayant une pluralité de deuxièmes pales.

Le procédé comporte les étapes suivantes :

- mesure d'une vitesse d'avancement de l'hélicoptère hybride,

- sous condition que la vitesse d'avancement soit supérieure à un premier seuil de vitesse et que chaque moteur dudit au moins un moteur soit en panne, mise en œuvre automatique d'un premier mode de pilotage de secours comprenant une étape de réduction automatique par un système de pilotage automatique d'un pas desdites deuxièmes pales jusqu'à un pas objectif rendant ladite au moins une hélice productrice d'une puissance motrice transmise au rotor de sustentation.

L'expression « réduction automatique par un système de pilotage automatique d'un pas desdites deuxièmes pales » s'entend au regard de la valeur de ce pas avant la panne.

L'expression « que chaque moteur dudit au moins un moteur soit en panne » signifie qu'en présence d'un unique moteur générateur de puissance pour l'entrainement du rotor de sustentation et de la ou des hélices, alors cet unique moteur est en panne et ne fournit plus de puissance. L'expression « que chaque moteur dudit au moins un moteur soit en panne » signifie qu'en présence de plusieurs moteurs générateurs de puissance pour l'entraînement du rotor de sustentation et de la ou des hélices, alors tous ces moteurs sont en panne et ne fournissent plus de puissance. Pour détecter de telles pannes, le procédé peut comporter une étape de détection d'au moins une panne de chaque moteur mise en oeuvre par un système de surveillance usuel comprenant par exemple un ou plusieurs calculateurs moteurs.

Par ailleurs, le pas dénommé par commodité « pas total » de chaque deuxième pale peut comprendre une composante de pas moyen et une composante de pas différentiel. La composante de pas moyen peut être pilotée par le pilote avec une commande de poussée pour régler la vitesse d'avancement et la composante de pas différentiel peut être pilotée par le pilote avec une commande de lacet pour piloter le mouvement en lacet de l'hélicoptère hybride. Par exemple, sur un hélicoptère hybride à deux hélices situées de part et d'autre du fuselage, le pas total des pales d'une hélice est égal à la somme de la composante de pas moyen et de la composante de pas différentiel alors que le pas des pales de l'autre hélice est égal à la composante de pas moyen moins la composante de pas différentiel. De fait, la réduction de la composante de pas moyen de chaque hélice induit la réduction du pas total des deuxièmes pales des hélices.

Dans ce contexte, l'expression « pas objectif » peut par exemple représenter pour chaque hélice soit une valeur du pas total des deuxièmes pales de l'hélice, soit une valeur de la composante de pas moyen du pas total rendant l'hélice source de puissance et non pas consommatrice de puissance..

Dans tous les cas, durant une phase de vol normal, chaque hélice et le rotor principal consomment une puissance générée par l'installation motrice.

Si tous les moteurs de l'installation motrice tombent en panne, ces moteurs ne peuvent plus fournir une puissance ni au rotor de sustentation ni à chaque hélice.

Dès lors, si la vitesse d'avancement de l'hélicoptère hybride est supérieure à un seuil de vitesse, le système de pilotage automatique applique automatiquement un premier mode de pilotage de secours innovant. En particulier, le système de pilotage automatique pilote des actionneurs pour baisser le pas total ou la composante de pas moyen de chaque hélice jusqu'à un pas dit « pas objectif » pour que chaque hélice ne soit plus consommatrice de puissance, mais au contraire fournisse une puissance motrice à l'installation motrice. Chaque hélice fournit ainsi une puissance à l'installation motrice pour tendre à ralentir le moins possible la vitesse de rotation du rotor de sustentation. La valeur du pas objectif n'est pas nécessairement calculée selon la variante, ou n'est pas nécessairement calculée à des fins de régulation.

De manière surprenante, l'installation motrice et notamment certains engrenages de cette installation motrice peuvent en effet être dimensionnés pour supporter un fonctionnement réversible de chaque hélice aussi bien en mode consommateur de puissance qu'en mode source de puissance.

A titre illustratif, sur un hélicoptère hybride à deux hélices chaque hélice peut consommer, hors cas de panne, une puissance de 1000 kilowatts alors que le rotor de sustentation peut consommer 500 kilowatts. En présence d'une panne de chaque moteur, le système de pilotage automatique agit sur les hélices pour que chaque hélice produise alors sensiblement 250 kilowatts pour l'entraînement du rotor de sustentation afin d'équilibrer le bilan de puissance. La puissance consommée par d'autres éléments de l'hélicoptère hybride a été négligée dans cet exemple dans un but didactique.

Suite à une panne de chaque moteur à un instant donné, le pilote n'a alors pas à agir rapidement pour baisser le pas collectif des premières pales du rotor de sustentation contrairement à d'autres solutions connues notamment sur des hélicoptères conventionnels. Le système de pilotage automatique agit seul pour modifier le pas des deuxièmes pales afin que la vitesse de rotation du rotor de sustentation ne baisse pas immédiatement et rapidement suite à la panne moteur. Le système de pilotage automatique impose un pas faible aux deuxièmes pales pour les rendre sources de puissance afin d'entraîner le rotor de sustentation à la place du ou des moteurs en panne. Par suite, le rotor de sustentation n'est pas sujet à des vibrations et/ou des charges aérodynamiques importantes résultant d'une baisse de pas collectif à haute vitesse d'avancement.

Dès lors, le pilote peut juste surveiller la vitesse de rotation du rotor de sustentation. La charge de travail du pilote est ainsi réduite. Le pilote a alors le choix soit de décélérer progressivement l'aéronef sans perdre d'altitude jusqu'à atteindre une vitesse d'avancement permettant la mise en autorotation du rotor de sustentation sans désagrément, soit de maintenir une vitesse d'avancement élevée en modifiant le pas cyclique des premières pales pour mettre en piqué l'hélicoptère hybride. Le procédé peut ainsi tendre à augmenter la sécurité du vol et à abaisser la charge du travail du pilote durant une phase accidentelle.

Le procédé peut de plus comporter une ou plusieurs des caractéristiques qui suivent.

Eventuellement, le procédé peut comporter une étape d'affichage, sur un afficheur comprenant une échelle de pas, d'un index illustrant un pas courant des deuxièmes pales et par exemple de la composante de pas moyen, d'un autre index illustrant une valeur d'un pas objectif calculé voire un autre index illustrant un pas moyen de poussée nulle décrit par la suite

À basse vitesse d'avancement un deuxième mode de pilotage de secours distinct du premier mode de pilotage de secours peut être mis en oeuvre suite à la panne du ou de tous les moteurs.

Dès lors, sous condition que ladite vitesse d'avancement soit inférieure ou égale au premier seuil et que chaque moteur dudit au moins un moteur soit en panne, le procédé comprend la mise en œuvre automatique d'un deuxième mode de pilotage de secours comprenant les étapes suivantes :

- réglage automatique par le système de pilotage automatique d'une composante d'un pas moyen dudit pas desdites deuxièmes pales à un pas moyen de poussée nulle, ledit pas moyen de poussée nulle étant calculé par ledit système de pilotage automatique pour que ladite au moins une hélice n'exerce aucune poussée en l'absence d'un ordre de mouvement en lacet.

Par ailleurs, le procédé peut comprendre durant ce deuxième mode de pilotage de secours une étape de sollicitation d'une commande de pas collectif par un pilote pour réduire le pas collectif des premières pales.

Durant ce deuxième mode de pilotage de secours, le pas collectif des premières pales peut être baissé car la vitesse d'avancement est relativement faible. Par exemple, le premier seuil de vitesse peut être de l'ordre de 150 noeuds, soit environ 277.8 kilomètres par heure.

De plus, la composante de pas moyen des deuxièmes pales est automatiquement forcée au pas moyen de poussée nulle.

Une hélice comportant des deuxièmes pales ayant une composante de pas moyen rendue égale à un pas moyen de poussée nulle ne fonctionne plus en mode source de puissance. Si la composante de pas différentiel est nulle, l'hélice ne fournit aucune poussée. Le pilote peut juste modifier la composante de pas différentiel pour contrôler le mouvement en lacet de l'aéronef.

Lorsque le pas objectif représente une valeur de la composante de pas moyen des hélices, le pas moyen de poussée nulle est supérieur au pas objectif. De même, lorsque le pas objectif représente une valeur de pas total et que la composante de pas différentiel est nulle, le pas moyen de poussée nulle est supérieur au pas objectif. Autrement dit, pour passer du premier mode de pilotage de secours au deuxième mode de pilotage de secours, la composante de pas moyen du pas des deuxièmes pales est augmentée.

Selon un autre aspect, durant le premier mode de pilotage de secours, ledit système de pilotage automatique peut déterminer une valeur du pas objectif rendant nulle une somme d'une puissance mécanique mise en œuvre par ladite au moins une hélice ainsi que d'une puissance mécanique consommée par ledit rotor de sustentation et d'une puissance mécanique consommée par l'installation motrice.

L'expression « peut déterminer une valeur du pas objectif rendant nulle » fait référence à une valeur du pas objectif plaçant la ou les hélices dans un point de fonctionnement permettant que la somme concernée soit sensiblement nulle. Autrement dit, lorsque le pas total ou la composante de pas moyen des deuxièmes pales atteint la valeur du pas objectif, ladite somme est sensiblement nulle.

La ou les hélices sont alors par exemple contrôlées pour simplement équilibrer le bilan de puissance, à savoir pour fournir la puissance strictement consommée par les autres organes consommateurs de puissance de l'aéronef.

Eventuellement, la puissance mécanique consommée par l'installation motrice peut être égale à la somme d'une puissance mécanique résultant de pertes d'installation et d'une puissance mécanique consommée par au moins un accessoire de l'installation motrice.

Par exemple et selon une possibilité, le procédé peut comporter la détermination par ledit système de pilotage automatique dudit pas objectif en résolvant l'équation suivante :

$$TCCdesynch = TCCcur - [(PWrp + PWlr + PWinst)/(dPWlr/dTCC)],$$

avec « TCCdesynch » qui représente ledit pas objectif, « TCCcur » qui représente une composante de pas moyen courante du pas des deuxièmes pales, « PWrp » qui représente la puissance mécanique consommée par ledit rotor de sustentation, « PWlr » qui représente la puissance mécanique mise en oeuvre par ladite au moins une hélice à savoir par la ou les hélices suivant le cas, « PWinst » qui représente la puissance mécanique consommée par l'installation motrice, « / » représente le signe de la division, « - » représente le signe de la soustraction, « + » représente le signe de l'addition, « = » représente le signe de l'égalité, « dPWlr/dTCC » représente la dérivée de la puissance mécanique consommée par ladite au moins une hélice par rapport à la composante de pas moyen courante du pas des deuxièmes pales.

La valeur de la composante TCCcur de pas moyen courante peut être mesurée de manière usuelle.

Par exemple, la valeur de la composante TCCcur de pas moyen courante est calculée de manière classique par le calculateur de pilotage via par exemple au moins la position courante de la commande de poussée voire d'actionneurs de stabilisation présents entre la commande de poussée et la ou les hélices.

Selon un autre exemple et sur un hélicoptère hybride à deux hélices, un premier senseur peut mesurer une position d'une première tige de commande du pas des pales de la première hélice qui est l'image du pas des pales de la première hélice. De même, un deuxième senseur peut mesurer une position d'une deuxième tige de commande du pas des pales de la deuxième hélice qui est l'image du pas des pales de la deuxième hélice. Par exemple, chaque senseur de mesure prend la forme d'un capteur LVDT ou RVDT. La valeur de la composante TCCcur de pas moyen courante est alors égale à la somme divisée par deux du pas des pales de la première hélice et du pas des pales de la deuxième hélice.

La valeur de la puissance mécanique PWrp consommée par ledit rotor de sustentation peut être calculée, par le biais du produit d'une vitesse de rotation d'un arbre et d'un couple exercé sur un arbre mesurés de manières usuelles voire d'une constante de proportionnalité. Par exemple, cet arbre peut être un mât rotor, ou un organe mobile conjointement avec le mât rotor à une vitesse de rotation proportionnelle à la vitesse de rotation du mât rotor.

Il en va de même pour la valeur de la puissance mécanique mise en œuvre par chaque hélice, à savoir consommée ou produite par chaque hélice suivant la valeur du pas total des deuxièmes pales. Par convention, cette puissance mécanique peut être positive lorsque l'hélice est consommatrice d'une puissance mécanique et négative lorsque l'hélice fournit une puissance mécanique à l'installation motrice. La puissance mécanique PWlr est égale soit à la puissance mécanique mise en œuvre par l'hélice en présence d'une unique hélice, soit à la somme des puissances mises en oeuvre par les hélices le cas échéant.

La valeur du terme PWinst de puissance mécanique consommée par l'installation motrice peut être déterminée de manière usuelle. Par exemple, cette puissance mécanique consommée par l'installation motrice est égale à la somme d'une puissance mécanique résultant de pertes d'installation PWprt et d'une puissance mécanique consommée par des accessoires PWcons de l'installation motrice. Eventuellement, la puissance mécanique résultant de pertes d'installation PWinst est égale à un pourcentage de la puissance mécanique consommée par ledit rotor de sustentation. Eventuellement, la puissance mécanique consommée par des accessoires PWcons peut être égale soit à un pourcentage de la puissance mécanique consommée par ledit rotor de sustentation, soit à une constante établie par des essais en vol.

La valeur du terme dPWlr/dTCC peut être établie par calcul à partir de courbes polaires usuelles des hélices fournissant la puissance PWlr en fonction du pas moyen. Ces courbes peuvent être établies par essais en vol ou simulations et peuvent être mémorisées sous des formes usuelles, telles qu'un tableau de valeurs, des équations, des abaques... Par exemple, dans un diagramme présentant en abscisse le pas moyen d'une pale d'une hélice à une certaine distance de l'axe de rotation de l'hélice et en ordonnée la puissance produite ou consommée par l'hélice, divers courbes sont tracées, chaque courbe étant établie par exemple à un coefficient d'avancement donné. Un tel coefficient d'avancement peut par exemple être une vitesse air vraie ou en peut être égal à un quotient de la vitesse air vraie de l'hélicoptère hybride par la vitesse de l'extrémité libre de la pale.

Selon un aspect, à l'initiation du premier mode de pilotage de secours, une vitesse de rotation des premières pales peut être maintenue à une vitesse de rotation de consigne atteinte avant ladite panne.

Durant le premier mode de pilotage, le pas collectif des premières pales du rotor de sustentation est par exemple inchangé.

Selon un autre aspect, le contrôle de la ou des hélices peut être obtenu de diverses manières.

Selon une première réalisation du contrôle de la ou des hélices, durant le premier mode de pilotage de secours, ladite réduction automatique par le système de pilotage automatique du pas desdites deuxièmes pales vers un pas objectif peut comporter l'étape suivante : asservissement d'une vitesse de rotation du rotor de sustentation à une vitesse de rotation de consigne par le système de pilotage automatique en régulant ledit pas desdites deuxièmes pales.

La réduction du pas des deuxièmes pales peut être obtenue précisément en effectuant une régulation de la vitesse de rotation du rotor de sustentation autour d'une valeur de consigne donnée par le pilote automatique en baissant par exemple la composante de pas moyen du pas des deuxièmes pales des hélices.

La première réalisation ne nécessite pas de calculer précisément une valeur du pas objectif puisque la régulation emmène automatiquement le pas des deuxièmes pales vers ce pas objectif. Ce pas objectif peut toutefois être calculé à des fins d'affichage.

Selon une deuxième réalisation du contrôle de la ou des hélices, durant le premier mode de pilotage de secours, ladite réduction automatique par le système de pilotage automatique du pas desdites deuxièmes pales vers un pas objectif comporte les étapes suivantes : calcul du pas objectif et asservissement du pas desdites deuxièmes pales à ce pas objectif.

Selon la deuxième réalisation, la valeur du pas objectif est calculée par le système de pilotage automatique, par exemple en appliquant la formule précédemment décrite : TCCdesynch=TCCcur-[(PWrp+PWlr+PWinst)/(dPWlr/dTCC)]. Le système de pilotage automatique procède alors à un asservissement de pleine autorité par exemple de la composante de pas moyen des deuxièmes pales sur cette valeur du pas objectif.

Selon une troisième réalisation du contrôle de la ou des hélices, durant le premier mode de pilotage de secours, ladite réduction automatique par le système de pilotage automatique du pas desdites deuxièmes pales vers un pas objectif comporte les étapes suivantes : calcul du pas objectif et asservissement du pas desdites deuxièmes pales à un pas de consigne égal au pas objectif ajusté en fonction d'une vitesse de rotation courante du rotor de sustentation au regard d'une vitesse de rotation de consigne.

Ainsi, la valeur du pas objectif est calculée par le système de pilotage automatique, par exemple en appliquant la formule précédemment décrite : TCCdesynch=TCCcur-[(PWrp+PWlr+PWinst)/(dPWlr/dTCC)]. En parallèle ou avant ou par la suite, une variable d'ajustement fonction de la vitesse de rotation courante du rotor de sustentation, et par exemple limitée à +/-2 degrés de pas, est déterminée. Le pas de consigne servant de base à la régulation est alors égal à la somme du pas objectif et de la variable d'ajustement.

Selon un autre aspect, lorsque le premier mode pilotage de secours est appliqué, le procédé peut comporter au moins une des quatre procédures de désengagement suivantes.

Selon une première procédure de sortie, sous condition que le premier mode de pilotage de secours soit mis en oeuvre, le procédé comporte une étape de sollicitation d'une interface homme-machine par un pilote, ladite interface homme-machine émettant un signal de changement de mode transmis au système de pilotage automatique, ledit système de pilotage automatique appliquant suite à une réception dudit signal de changement du deuxième mode de pilotage de secours maintenant une composante de pas moyen du pas des deuxièmes pales égale à un pas moyen de poussée nulle lorsque le pas des deuxièmes pales atteint le pas moyen de poussée nulle, ledit pas moyen de poussée nulle étant calculé par ledit système de pilotage automatique pour que ladite au moins une hélice n'exerce aucune poussée en l'absence d'un ordre de mouvement en lacet.

L'interface homme-machine peut comprendre un moyen connu, tel que par exemple une surface tactile, un bouton, une commande vocale... Un équipage sollicite alors cette interface homme-machine pour basculer directement vers le deuxième mode de pilotage automatique. Même si les conditions optimales ne sont pas réunies à cet effet, le pilote est libre de faire ce choix.

Selon une deuxième procédure de sortie, sous condition que le premier mode de pilotage de secours soit mis en oeuvre, le procédé peut comporter les étapes suivantes :

- sollicitation d'une commande de pas collectif par un pilote lorsque ladite vitesse d'avancement est inférieure ou égale au premier seuil de vitesse,

- mise en œuvre par ledit système de pilotage automatique du deuxième mode de pilotage de secours maintenant une composante de pas moyen du pas des deuxièmes pales égale à un pas moyen de poussée nulle lorsque le pas des deuxièmes pales atteint le pas moyen de poussée nulle, ledit pas moyen de poussée nulle étant calculé par ledit système de pilotage automatique pour que ladite au moins une hélice n'exerce aucune poussée en l'absence d'un ordre de mouvement en lacet.

Eventuellement, le système de pilotage automatique peut inhiber la commande de pas collectif tant que la vitesse d'avancement est supérieure au premier seuil de vitesse

Selon cette deuxième procédure, le pilote sollicite une commande de pas collectif pour baisser intentionnellement le pas collectif des premières pales du rotor de sustentation lorsque l'aéronef est en dessous du premier seuil de vitesse.

En raison de la régulation effectuée par le système de pilotage automatique lors de l'application du premier mode de pilotage de secours, le pas des deuxièmes pales de la ou des hélices est augmenté pour que la somme des puissances évoquées précédemment restent nulle. En particulier, le pas des deuxièmes pales de la ou des hélices, et par exemple la composante de pas moyen, est alors augmenté instantanément pour éviter que la vitesse de rotation du rotor de sustentation augmente, jusqu'à ce que la composante de pas moyen du pas des hélices atteigne le pas moyen de poussée nulle précédemment décrit. Le système de pilotage automatique applique alors le deuxième mode pilotage de secours en maintenant la composante de pas moyen du pas des deuxièmes pales des hélices égale au pas moyen de poussée nulle.

La vitesse de rotation du rotor de sustentation est alors désormais contrôlée par le pilote à travers le pilotage du pas collectif et du pas cyclique des premières pales à l'aide de la commande de pas collectif et de la commande de pas cyclique.

Selon une troisième procédure de sortie, sous condition que le premier mode de pilotage de secours soit mis en oeuvre, le procédé comporte les étapes suivantes : comparaison de ladite vitesse d'avancement à un deuxième seuil de vitesse qui est inférieur au premier seuil de vitesse, baisse automatique par le système de pilotage automatique du pas des premières pales et mise en œuvre par ledit système de pilotage automatique du deuxième mode de pilotage de secours lorsque ladite vitesse d'avancement est inférieure au deuxième seuil de vitesse.

Cette procédure peut notamment être appliquée dans le cas où l'équipage oublie de baisser le pas collectif des premières pales conformément à la deuxième procédure de sortie. Le deuxième seuil de vitesse peut être inférieur au premier seuil de vitesse, par exemple de l'ordre de 30 pourcents et par exemple de l'ordre de 100 à 120 noeuds soit de l'ordre de 185 kilomètres par heure à 222 kilomètres par heure. La sortie du premier mode de pilotage de secours se fait automatiquement par le système de pilotage automatique lorsque la vitesse d'avancement descend en dessous d'un deuxième seuil.

Selon une quatrième procédure de sortie, sous condition que le premier mode de pilotage de secours soit mis en oeuvre, le procédé comporte les étapes suivantes : détection d'un redémarrage dudit au moins un moteur, suite à ladite détection, désengagement automatique par ledit système de pilotage automatique du premier mode de pilotage de secours.

En cas de redémarrage d'un moteur précédemment en panne, le système de pilotage automatique désengage le premier mode de pilotage de secours, par exemple pour ne pas entrer en conflit avec un asservissement réalisé par un calculateur moteur.

Selon un autre aspect, ladite vitesse d'avancement évoquée précédemment peut être la vitesse air vraie de l'hélicoptère hybride.

Par ailleurs, l'invention a aussi pour objet un hélicoptère hybride appliquant ce procédé. L'hélicoptère hybride comprend une installation motrice reliée à au moins un rotor de sustentation et à au moins une hélice, ladite installation motrice ayant au moins un moteur, ledit rotor de sustentation ayant une pluralité de premières pales et ladite au moins une hélice ayant une pluralité de deuxièmes pales. L'hélicoptère hybride comporte un senseur de vitesse pour mesurer une vitesse d'avancement de l'hélicoptère hybride et un système de pilotage automatique relié au senseur de vitesse, ledit système de pilotage automatique étant configuré pour appliquer le procédé de l'invention.

L'invention et ses avantages apparaîtront avec plus de détails dans le cadre de la description qui suit avec des exemples donnés à titre illustratif en référence aux figures annexées qui représentent :

la figure 1, un vue schématique d'un hélicoptère hybride selon l'invention,

la figure 2, une vue illustrant le procédé selon une première réalisation,

la figure 3, une vue illustrant le procédé selon une deuxième réalisation,

la figure 4, une vue illustrant le procédé selon une troisième réalisation,

la figure 5, une vue illustrant un afficheur durant l'application du procédé selon l'invention avant une panne d'une installation motrice,

la figure 6, une vue illustrant un afficheur durant l'application du procédé selon l'invention durant la mise en œuvre du premier mode de pilotage de secours,

la figure 7, une vue illustrant un afficheur durant l'application du procédé selon l'invention illustrant un passage du premier mode de pilotage de secours vers le deuxième mode de pilotage de secours, et

la figure 8, une vue illustrant un afficheur durant l'application du procédé selon l'invention durant la mise en oeuvre du deuxième mode de pilotage de secours.

Les éléments présents dans plusieurs figures distinctes sont affectés d'une seule et même référence.

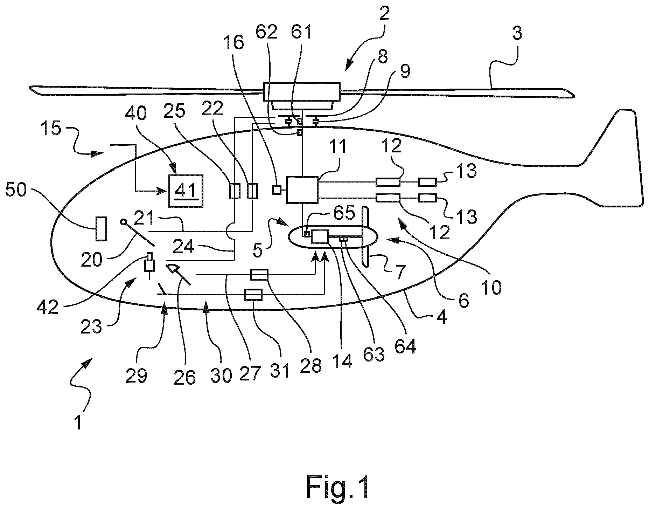

La figure 1 présente un exemple d'hélicoptère hybride 1 selon l'invention.

Cet hélicoptère hybride 1 comporte une cellule 4 portant au moins un rotor de sustentation 2. Ce rotor de sustentation 2 est muni de plusieurs pales dénommées « premières pales 3 » par commodité.

De plus, l'hélicoptère hybride 1 est pourvu d'une hélice 6 ou de plusieurs hélices 6. L'expression « chaque hélice » est parfois utilisée par la suite que l'aéronef comporte une unique hélice ou plusieurs hélices dans un souci de simplification. La ou les hélices 6 comportent chacune plusieurs pales dénommées « deuxièmes pales 7 » par commodité. La ou les hélices 6 peuvent être disposées latéralement par rapport à la cellule 4, en étant éventuellement portées par un support 5. Un tel support 5 peut être éventuellement aérodynamique telle qu'une aile par exemple. Ainsi, selon la variante, l'hélicoptère hybride 1 comporte une unique hélice 6 ou au moins deux hélices 6, et éventuellement au moins deux hélices 6 disposées latéralement éventuellement de part et d'autre de la cellule 4.

Par ailleurs, l'hélicoptère hybride 1 comporte une installation motrice 10 pour fournir une puissance au rotor de sustentation 2 et à chaque hélice 6. Cette installation motrice 10 comporte à cet effet au moins un moteur 12 contrôlé par un calculateur moteur 13 usuel. Un tel calculateur moteur 13 peut être à même de détecter une panne moteur par des techniques classiques et par le biais de capteurs usuels.

Le terme « calculateur » désigne par la suite une unité qui peut comprendre par exemple au moins un processeur et au moins une mémoire, au moins un circuit intégré, au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur....

En outre, l'installation motrice 10 peut comprendre, par exemple au sein d'un système d'interconnexion, au moins une boîte de transmission de puissance 11, 14, au moins un arbre, et/ou au moins un organe de connexion entre deux organes en rotation... Par exemple, un ou plusieurs moteurs 12 sont reliés mécaniquement par une ou des chaines de liaison mécaniques à une boîte de transmission de puissance principale 11 qui entraîne en rotation le rotor de sustentation 2. De plus, la boîte de transmission de puissance principale 11 peut être reliée mécaniquement par au moins un arbre à une boîte de transmission de puissance latérale 14 par hélice qui est donc à son tour reliée à une hélice 6.

En outre, l'installation motrice 10 peut mettre en mouvement divers accessoires 16. Par exemple, la boîte de transmission de puissance principale 11 peut mettre en mouvement une pompe d'un circuit hydraulique.

Par ailleurs, l'hélicoptère hybride 1 peut comprendre diverses commandes pour être piloté par un pilote humain.

En particulier, l'hélicoptère hybride 1 peut comprendre un système pour piloter collectivement et cycliquement le pas des premières pales 3. Un tel système peut par exemple inclure un ensemble de plateaux cycliques 8. Ainsi, à chaque instant, le pas des premières pales 3 peut être égal à la somme d'un pas collectif identique pour toutes les premières pales 3 et d'un pas cyclique qui varie en fonction de l'azimut de chaque première pale 3.

Dès lors, l'hélicoptère hybride 1 peut comprendre une commande de pas collectif 20 qui agit sur une chaine de commande mécanique et/ou électrique 21 pour faire varier collectivement le pas des premières pales 3, via le cas échéant l'ensemble de plateaux cycliques 8. De même, l'hélicoptère hybride 1 peut comprendre une commande de pas cyclique 23 qui agit sur une ou plusieurs chaines de commande mécaniques et/ou électriques 24 pour faire varier cycliquement le pas des premières pales 3, via le cas échéant l'ensemble de plateaux cycliques 8.

De manière usuelle, l'hélicoptère hybride 1 peut comprendre un système pour piloter le pas des deuxièmes pales 7. A chaque instant le pas des deuxièmes pales 7 d'une hélice 6 peut être égal à la somme d'une composante de pas moyen et d'une composante de pas différentiel ou à la différence de cette composante de pas moyen et de la composante de pas différentiel.

De manière usuelle, l'hélicoptère hybride 1 peut comprendre une commande de poussée 26 qui agit sur une ou plusieurs chaines de commande mécaniques et/ou électriques 27 pour faire varier la composante de pas moyen du pas des deuxièmes pales 3 afin par exemple de piloter une vitesse d'avancement de l'hélicoptère hybride 1. De même, l'hélicoptère hybride 1 peut comprendre une commande de lacet 29 qui agit sur une ou plusieurs chaines de commande mécaniques et/ou électriques 30 pour faire varier la composante de pas différentiel du pas des deuxièmes pales 7 afin par exemple de piloter un mouvement en lacet de l'hélicoptère hybride 1.

On se référera à la littérature pour obtenir des informations sur une telle architecture, et par exemple au document FR 2946315.

Par ailleurs, l'hélicoptère hybride 1 comporte un système de pilotage automatique 40 pour appliquer le procédé de l'invention. Ce système de pilotage automatique 40 peut comprendre un calculateur de pilotage automatique 41.

En outre, le système de pilotage automatique 40 peut comprendre au moins un actionneur agencé sur une des diverses chaînes de commande 21, 24, 27, 30 précitées pour piloter le pas des premières pales 3 et des deuxièmes pales 7. Ainsi, le calculateur de pilotage automatique 40 peut être configuré pour émettre des commandes, par exemple sous la forme d'un signal électrique, numérique, analogique ou optique vers au moins un actionneur de pas collectif 22 permettant de modifier collectivement le pas des premières pales 3, à au moins un actionneur de pas cyclique 25 permettant de modifier cycliquement le pas des premières pales 3, à au moins un actionneur de poussée 28 permettant de modifier de la même manière la composante de pas moyen du pas des deuxièmes pales 7, et à au moins un actionneur de lacet 31 permettant de modifier la composante de pas différentiel du pas des deuxièmes pales 7.

Par ailleurs, le système de pilotage automatique 40 peut comporter une interface homme-machine 42 en communication filaire ou non filaire, directe ou indirecte, avec le calculateur de pilotage automatique 41. Une telle interface homme-machine 42 peut être du type tactile, mobile, sonore... Par exemple une telle interface homme-machine 42 peut comprendre un bouton, un microphone, un écran tactile...

Selon un autre aspect, le système de pilotage automatique 40 peut comporter un afficheur 50.

Par ailleurs, le système de pilotage automatique 40 peut comporter ou peut coopérer avec différents systèmes de mesure de l'hélicoptère hybride 1.

Ainsi, un senseur de vitesse 15 de l'hélicoptère hybride 1 peut être en communication filaire ou non filaire, directe ou indirecte, avec par exemple le calculateur de pilotage automatique 41 pour fournir une information relative à une vitesse d'avancement de cet hélicoptère hybride 1. Par exemple, le senseur de vitesse 15 est un senseur usuel permettant de déterminer la vitesse air vraie de l'hélicoptère hybride 1, par exemple par le biais d'une différence de pression.

En outre, l'hélicoptère hybride 1 peut comprendre un premier couplemètre 61 et un premier capteur de vitesse de rotation 62 agencés sur un organe tournant et par exemple un mât rotor du rotor de sustentation 2 ou autres. Un calculateur, voire le calculateur de pilotage automatique 41, peut être relié à ce premier couplemètre 61 et à ce premier capteur de vitesse de rotation 62 pour déterminer une puissance mécanique PWrp consommée par le rotor de sustentation 2, cette puissance mécanique PWrp consommée par le rotor de sustentation 2 étant éventuellement transmise au calculateur de pilotage automatique 41 lorsque calculée par un autre calculateur. La puissance mécanique PWrp consommée par le rotor de sustentation 2 peut être égale au produit d'une vitesse mesurée par le premier capteur de vitesse de rotation 62 et d'un couple mesuré par le premier couplemètre 61 et éventuellement d'un coefficient de proportionnalité en fonction des emplacements respectifs du premier capteur de vitesse de rotation 62 et du premier couplemètre 61.

Eventuellement, le calculateur de pilotage automatique 41 peut en déduire de manière usuelle une puissance mécanique PWcons consommée par les accessoires 16 et/ou une puissance mécanique PWprt résultant de pertes d'installation. La somme de la puissance mécanique PWcons consommée par les accessoires 16 et de la puissance mécanique PWprt résultant de pertes d'installation donne une puissance mécanique PWinst consommée par l'installation motrice 10 en tant que telle.

En outre, l'hélicoptère hybride 1 peut comprendre au moins un deuxième couplemètre 63 et au moins un deuxième capteur de vitesse de rotation 64 par hélice agencés sur un organe tournant et par exemple un arbre d'une hélice 6. Un calculateur voire le calculateur de pilotage automatique 41 peut être relié à cet au moins un deuxième couplemètre 63 et à cet au moins un deuxième capteur de vitesse de rotation 64 pour déterminer une puissance intermédiaire par hélice 6. Chaque puissance intermédiaire peut être égale au produit d'une vitesse mesurée par un deuxième capteur de vitesse de rotation 64 et d'un couple mesuré par un deuxième couplemètre 63 et éventuellement d'un coefficient de proportionnalité en fonction des emplacements respectifs du deuxième capteur de vitesse de rotation 64 et du deuxième couplemètre 63. La somme des puissances intermédiaires donne une puissance mécanique PWlr consommée ou produite par l'ensemble des hélices 6, cette puissance mécanique PWlr consommée ou produite par l'ensemble des hélices 6 étant éventuellement transmise au calculateur de pilotage automatique 41 lorsque calculée par un autre calculateur.

Par ailleurs, des senseurs peuvent mesurer des informations porteuses du pas des pales des hélices. Par exemple, un premier senseur 65 peut mesurer une information relative à une position d'une première tige de commande du pas des pales de la première hélice qui est l'image du pas des pales de la première hélice. De même, un deuxième senseur non illustré peut mesurer une position d'une deuxième tige de commande du pas des pales de la deuxième hélice qui est l'image du pas des pales de la deuxième hélice.

Dès lors, le calculateur de pilotage automatique 41 est configuré pour appliquer le procédé de l'invention. Par exemple, au moins un processeur exécute à cet effet des instructions mémorisées sur une mémoire.

Selon le procédé, le calculateur de pilotage automatique 41 ou un autre calculateur peut calculer un pas objectif à l'aide de la relation suivante :

$$TCCdesynch = TCCcur - [(PWrp + PWlr + PWinst)/(dPWlr/dTCC),$$

avec « TCCdesynch » qui représente la valeur du pas objectif dénommée plus simplement « pas objectif », « TCCcur » qui représente une composante de pas moyen courante du pas des deuxièmes pales 7, « PWrp » qui représente la puissance mécanique consommée par ledit rotor de sustentation 2, « PWlr » qui représente la puissance mécanique mise en œuvre par ladite au moins une hélice 6, « PWinst » qui représente la puissance mécanique consommée par l'installation motrice 10, « / » représente le signe de la division, « - » représente le signe de la soustraction, « + » représente le signe de l'addition, « = » représente le signe de l'égalité, « dPWlr/dTCC » représente la dérivée de la puissance mécanique consommée par ladite au moins une hélice 6 par rapport à la composante de pas moyen courante du pas des deuxièmes pales 7.

Le pas objectif TCCdesync peut être utilisé à des fins d'informations et/ou de régulation comme expliqué par la suite. Le pas objectif peut représenter une composante de pas moyen du pas des pales de la ou des hélices.

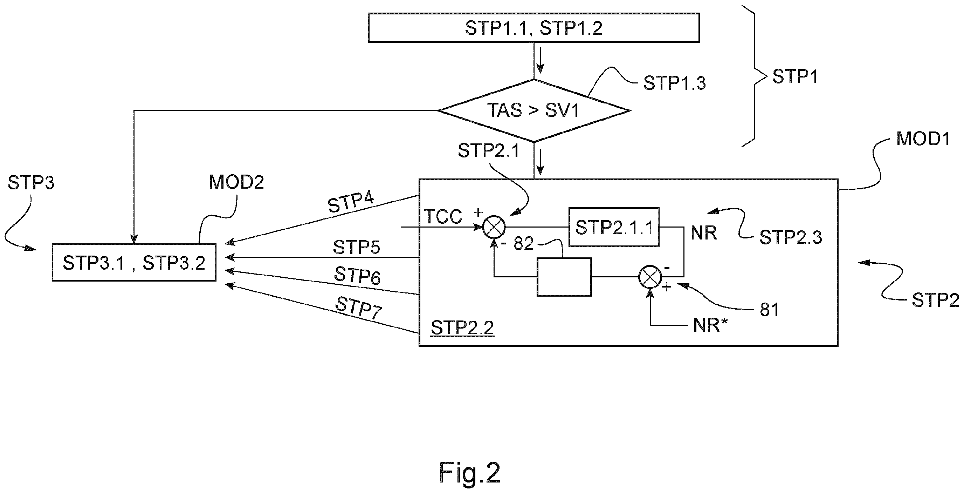

En référence à la figure 2 et quelle que soit la réalisation de l'invention, le procédé comporte une étape de détermination STP1 de la situation courante.

Cette étape de détermination STP1 de la situation courante comporte une étape STP1.1 de mesure de la vitesse d'avancement TAS de l'hélicoptère hybride 1 avec le senseur de vitesse 15 et une étape STP1.2 de vérification du bon fonctionnement de chaque moteur 12 par exemple réalisée par chaque calculateur moteur 13. Le calculateur de pilotage automatique 41 reçoit ainsi une information porteuse de la vitesse d'avancement TAS et une ou plusieurs informations porteuses de l'état de fonctionnement des moteurs 12.

Le calculateur de pilotage automatique 41 met alors en oeuvre une étape STP1.3 de choix du mode de pilotage de secours à éventuellement exécuter.

Ainsi, si le moteur 12 ou le cas échéant tous les moteurs 12 sont en panne et que la vitesse d'avancement TAS est supérieure à un premier seuil de vitesse SV1 alors le calculateur de pilotage automatique 41 met en œuvre durant une étape STP2 un premier mode de pilotage de secours MOD1. Par contre, si le moteur 12 ou le cas échéant tous les moteurs 12 sont en panne et que la vitesse d'avancement TAS est inférieure ou égale au premier seuil de vitesse SV1 alors le calculateur de pilotage automatique 41 met en oeuvre durant une étape STP3 un deuxième mode de pilotage de secours MOD2.

Lorsque le deuxième mode de pilotage de secours MOD2 est appliqué, le procédé comporte une étape de réglage automatique STP3.1 durant laquelle le système de pilotage automatique 40 commande au moins un actionneur de poussée 28 pour que la composante TCC de pas moyen du pas de deuxièmes pales 7 soit égale à un pas moyen de poussée nulle TCCO.

Ce pas moyen de poussée nulle TCC0 est éventuellement calculé par le système de pilotage automatique 40 pour que la ou les hélices 6 exercent uniquement une fonction anticouple en présence d'un ordre de mouvement en lacet donné par le pilote.

Par exemple, le pas moyen de poussée nulle TCC0 est déterminé à l'aide de la relation suivante :

$$TCC0 = cte + Arctg(TAS/0.75*omega*R)$$

où « cte » représente une constante, « TAS » représente la vitesse air vraie de l'hélicoptère hybride 1, « oméga » représente la vitesse de rotation des hélices 6, « R » représente le rayon d'un cercle décrit par une extrémité libre de chaque deuxième pale 7, « Arctg » représente la fonction trigonométrique arctangente, « / » représente le signe de la division, « * » représente le signe de la multiplication, « + » représente le signe de l'addition.

En parallèle voire préalablement à cette étape, le procédé peut prévoir une étape de manoeuvre par le pilote de la commande de pas collectif 20 pour réduire le pas collectif des premières pales 3.

Lorsque le premier mode de pilotage de secours MOD1 est appliqué, durant une étape de réduction automatique STP2.1 d'un pas, le système de pilotage automatique 40 commande les actionneurs requis pour tendre à baisser le pas total ou la composante de pas moyen du pas total des deuxièmes pales 7 rendant chaque hélice 6 productrice d'une puissance motrice.

Le pas voire la composante de pas moyen atteint un pas objectif qui est de fait différent du pas moyen de poussée nulle précédent. Le pas objectif peut correspondre à la valeur du pas total ou de la composante de pas moyen à atteindre pour que chaque hélice produise une puissance. Le pas objectif peut correspondre à la valeur du pas total ou de la composante de pas moyen à atteindre pour que la somme de la puissance mécanique PWlr mise en oeuvre par la ou les hélices ainsi que de la puissance mécanique PWrp consommée par le rotor de sustentation 2 et de la puissance mécanique PWinst consommée par l'installation motrice 10 soit sensiblement nulle soit : PWlr+PWrp+PWinst=0.

Pour rappel, la puissance mécanique PWinst consommée par l'installation motrice 10 peut être égale à la somme d'une puissance mécanique PWprt résultant de pertes d'installation et d'une puissance mécanique PWcons consommée par un ou plusieurs accessoires 16 soit : PWinst=Pwprt+PWcons.

Par exemple, le système de pilotage automatique 40 transmet un signal à chaque actionneur de poussée 28 pour modifier la composante de pas moyen du pas des deuxièmes pales 7.

En outre, ni le pilote ni le système de pilotage automatique 40 ne doivent éventuellement agir sur le pas collectif des premières pales 3 pour maintenir le rotor de sustentation 2 à une vitesse de rotation sensiblement constante.

Pour établir le signal à transmettre à chaque actionneur de poussée 28 afin de produire la puissance requise avec la ou les hélices 6, plusieurs réalisations sont envisageables.

Selon la première réalisation de la figure 2, durant une étape STP2.3, le système de pilotage automatique 40 asservit la vitesse de rotation Nr du rotor de sustentation 2 à une vitesse de rotation de consigne Nr* en régulant le pas des deuxièmes pales 7 selon une boucle de régulation usuelle.

Ainsi, le calculateur de pilotage automatique 41 mesure la vitesse de rotation Nr du rotor de sustentation 2 durant une étape STP2.1.1. Ensuite, le calculateur de pilotage automatique 41 détermine par exemple avec un comparateur 81 un signal d'erreur correspondant à la différence entre la vitesse de rotation courante Nr du rotor de sustentation 2 et la vitesse de rotation de consigne Nr* visant à ne pas ralentir le rotor de sustentation 2 suite à la panne moteur le cas échéant du ou des moteurs. Le calculateur de pilotage automatique 41 peut exploiter ce signal d'erreur dans un correcteur 82, et par exemple un correcteur proportionnel intégral, pour générer un ordre de réduction de la composante de pas moyen du pas des deuxièmes pales des hélices 6.

Par suite, lors de la panne, le rotor de sustentation 2 tend à ralentir. La régulation décrite précédemment permet au calculateur de pilotage automatique 41 de baisser le pas des hélices 6 pour tendre à éviter de ralentir le rotor de sustentation 2. Le pas objectif n'est pas nécessairement calculé selon cette réalisation, mais peut l'être durant une étape STP2.2, puisque le pas des deuxièmes pales est automatiquement baissé pour tendre à maintenir constante la vitesse de rotation du rotor de sustentation.

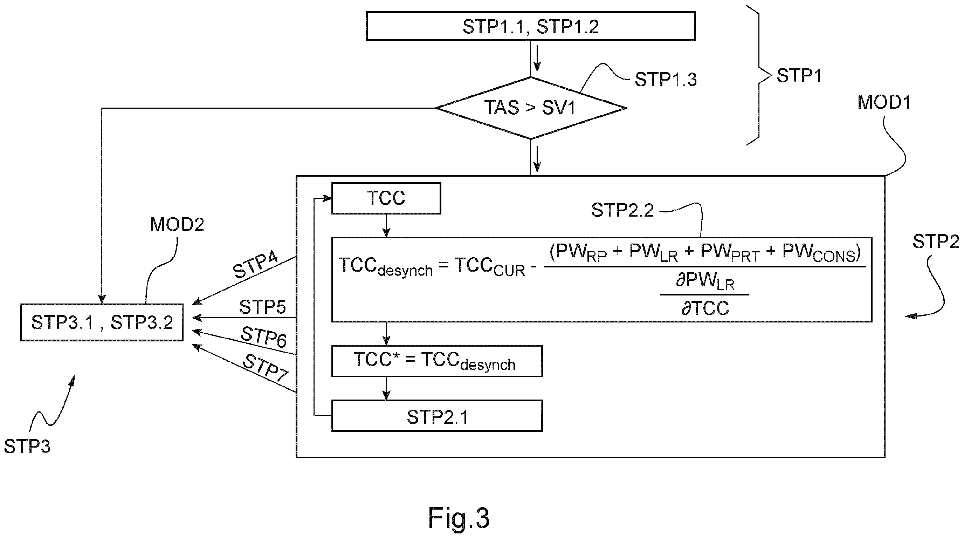

Selon la deuxième réalisation de la figure 3, le système de pilotage automatique 40 asservit un pas des deuxièmes pales 7 à un pas objectif calculé.

Durant une étape intermédiaire STP2.2, le calculateur de pilotage automatique 41 détermine le pas objectif TCCdesynch par exemple en appliquant la formule précédemment décrite.

Dès lors, ce pas objectif calculé TCCdesynch devient selon la deuxième réalisation un pas de consigne TCC*. Durant l'étape de réduction automatique STP2.1 d'un pas des deuxièmes pales 7, le calculateur de pilotage automatique 41 peut appliquer une boucle de régulation usuelle qui prend en considération le pas de consigne et la composante de pas moyen TCC courante du pas des deuxièmes pales 7 pour générer un signal de commande. Ce signal de commande est transmis à chaque actionneur de poussée 28 afin de modifier par exemple la composante de pas moyen du pas des deuxièmes pales des hélices 2 et la faire tendre vers le pas de consigne.

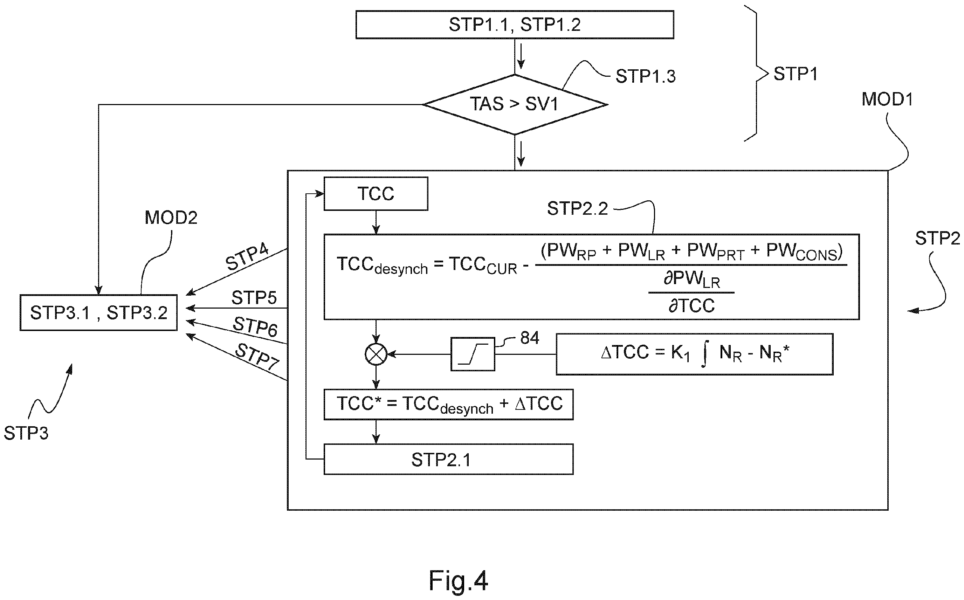

Selon la troisième réalisation de la figure 4, le calculateur de pilotage automatique 41 détermine le pas objectif TCCdesynch.

Par rapport à la deuxième réalisation, le calculateur de pilotage automatique 41 détermine aussi une valeur d'ajustement ATCC. Cette valeur d'ajustement ATCC est égale à un gain K1 mémorisé multiplié par l'intégral d'une différence entre la vitesse de rotation courante Nr du rotor de sustentation 2 et la vitesse de rotation de consigne Nr*. Eventuellement, cette valeur d'ajustement est écrêtée par un écrêteur 84. Dès lors, le pas de consigne TCC*est égal à la somme du pas objectif TCCdesynch et de la valeur d'ajustement ATCC éventuellement écrêtée.

Indépendamment de la réalisation et en référence à la figure 2, le premier mode de pilotage MOD1 peut être désengagé de différentes manières.

Selon une première procédure de sortie, le procédé prévoit une étape de sollicitation STP4 de l'interface homme-machine 42 par un pilote. Cette interface homme-machine 42 émet par exemple un signal de changement de mode électrique, analogique numérique, ou optique qui est transmis au système de pilotage automatique 40, et par exemple au calculateur de pilotage automatique 41. Suite à la réception de ce signal, le système de pilotage automatique 40 applique le deuxième mode de pilotage de secours MOD2. Dès lors, chaque hélice 6 est pilotée pour que la composante de pas moyen du pas de ces deuxièmes pales 7 soit égale au pas moyen de poussée nulle TCCO.

Selon une deuxième procédure de sortie STP5, le pilote manoeuvre la commande de pas collectif 20 lorsque la vitesse d'avancement TAS est inférieure ou égale au premier seuil de vitesse SV1. En raison de la régulation effectuée, la composante de pas moyen du pas des deuxièmes pales 7 est augmentée. Le deuxième mode de pilotage de secours MOD2 est alors mis en oeuvre lorsque la composante de pas moyen du pas des deuxièmes pales 7 est égale au pas moyen de poussée nulle TCCO.

Selon une troisième procédure de sortie STP6, le calculateur de pilotage automatique 41 compare la vitesse d'avancement courante TAS à un deuxième seuil de vitesse SV2. Lorsque la vitesse d'avancement TAS est inférieure au deuxième seuil de vitesse SV2, le calculateur de pilotage automatique 41 baisse automatiquement le pas des premières pales 3 et applique le deuxième mode de pilotage de secours MOD2.

Selon une quatrième procédure de sortie STP7, au moins un moteur 12 est redémarré. Le calculateur moteur 13 du moteur 12 redémarré transmet un signal au calculateur de pilotage automatique 41 pour l'en informer. Dès lors, le calculateur de pilotage automatique 41 détecte le redémarrage du moteur 12 et désengage automatiquement le premier mode de pilotage de secours MOD1.

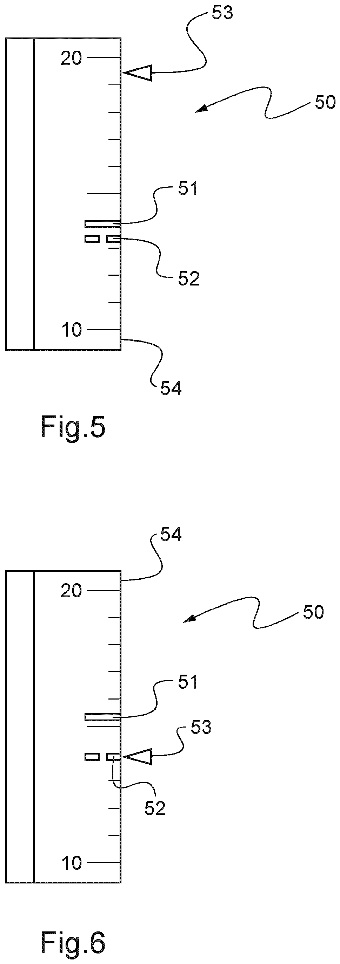

Les figures 5 à 8 illustrent le déroulé du procédé selon l'invention mettant en oeuvre la deuxième procédure de sortie au travers d'un afficheur 50 de l'hélicoptère hybride 1.

Cet afficheur 50 peut comprendre une échelle graduée en pas 54. L'afficheur 50 est contrôlé par un calculateur voire par le calculateur de pilotage automatique 41 pour présenter un index 53 représentant par exemple la composante de pas moyen courante de la ou des hélices 6. De plus, l'afficheur 50 peut présenter un premier repère 51 représentant le pas moyen de poussée nulle et un deuxième repère 52 représentant le pas de désynchronisation.

En référence à la figure 5 et en l'absence de panne de chacun du ou des moteurs 12, la composante de pas moyen courante du pas des deuxièmes pales de la ou des hélices 6 est supérieure au pas moyen de poussée nulle, ce pas moyen de poussée nulle étant supérieur au pas de désynchronisation.

En référence à la figure 6, suite à une panne totale de chacun du ou des moteurs 12, le système de pilotage automatique 40 pilote les pas des deuxièmes pales de la ou des hélices 6 pour les rendre productrice de puissance. La composante de pas moyen courante du pas des deuxièmes pales de la ou des hélices atteint le pas de désynchronisation.

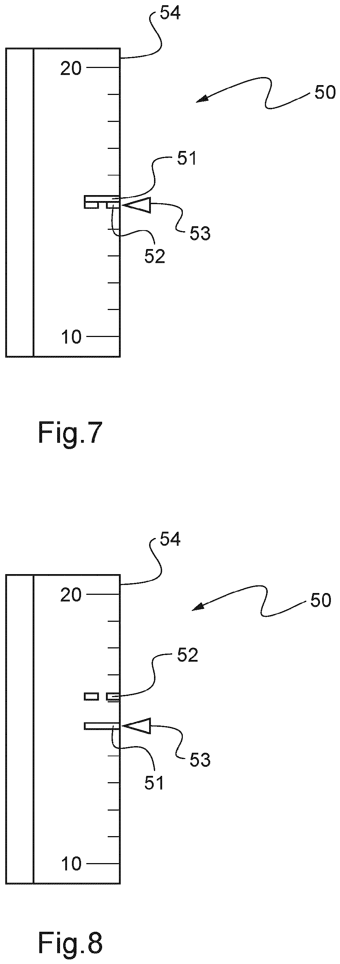

En référence à la figure 7, lorsque l'hélicoptère hybride 1 atteint une vitesse d'avancement inférieure au deuxième seuil de vitesse SV2, le pilote baisse le pas collectif des premières pales 3. Il en résulte une augmentation du pas de désynchronisation pour éviter que le régime de rotation du rotor de sustentation 2 baisse, la composante de pas moyen courante du pas des deuxièmes pales de la ou des hélices 6 restant égale au pas de désynchronisation. En référence à la figure 8, le deuxième mode de pilotage de secours est alors engagé, la composante de pas moyen courante de la ou des hélices étant maintenue pour être égale au pas moyen de poussée nulle.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention qui est défini par les revendications affichées.

**Revendications**

1. Procédé de contrôle d'un hélicoptère hybride (1), ledit hélicoptère hybride (1) ayant une installation motrice (10) reliée à au moins un rotor de sustentation (2) et à au moins une hélice (6), ladite installation motrice (10) ayant au moins un moteur (12), ledit rotor de sustentation (2) ayant une pluralité de premières pales (3) et ladite au moins une hélice (6) ayant une pluralité de deuxièmes pales (7),
**caractérisé en ce que** le procédé comporte les étapes suivantes :

   - mesure (STP1.1) d'une vitesse d'avancement (TAS) de l'hélicoptère hybride (1),
   - sous condition (STP1.3) que ladite vitesse d'avancement (TAS) soit supérieure à un premier seuil de vitesse (SV1) et que chaque moteur dudit au moins un moteur (12) soit en panne, mise en oeuvre (STP2) automatique d'un premier mode de pilotage de secours (MOD1) comprenant une étape de réduction automatique (STP2.1) par un système de pilotage automatique (40) d'un pas desdites deuxièmes pales (7) jusqu'à un pas objectif rendant ladite au moins une hélice (6) productrice d'une puissance motrice transmise au rotor de sustentation (2), et **en ce que** sous condition que ladite vitesse d'avancement (TAS) soit inférieure ou égale au premier seuil de vitesse (SV1) et que chaque moteur dudit au moins un moteur (12) soit en panne, mise en oeuvre (STP3) automatique d'un deuxième mode de pilotage de secours (MOD2) comprenant les étapes suivantes :
   - réglage automatique (STP3.1) par le système de pilotage automatique (40) d'une composante (TCC) de pas moyen dudit pas desdites deuxièmes pales (7) à un pas moyen de poussée nulle (TCCO), ledit pas moyen de poussée nulle (TCCO) étant calculé par ledit système de pilotage automatique (40) pour que ladite au moins une hélice (6) n'exerce aucune poussée en l'absence d'un ordre de mouvement en lacet.

**2.** Procédé selon la revendication 1,
**caractérisé en ce que** durant le premier mode de pilotage de secours (MOD1), ledit système de pilotage automatique (40) détermine une valeur du pas objectif rendant nulle une somme d'une puissance mécanique (PWlr) mise en œuvre par ladite au moins une hélice ainsi que d'une puissance mécanique (PWrp) consommée par ledit rotor de sustentation (2) et d'une puissance mécanique (PWinst) consommée par l'installation motrice (10).

**3.** Procédé selon la revendication 2,
**caractérisé en ce que** ladite puissance mécanique (PWinst) consommée par l'installation motrice est égale à la somme d'une puissance mécanique (PWprt) résultant de pertes d'installation et d'une puissance mécanique (PWcons) consommée par au moins un accessoire (16) de l'installation motrice (10).

**4.** Procédé selon l'une quelconque des revendications 1 à 3,
**caractérisé en ce que** le procédé comporte la détermination par ledit système de pilotage automatique (40) dudit pas objectif en résolvant l'équation suivante :

$$TCCdesynch = TCCcur - [(PWrp + PWlr + PWinst)/(dPWlr/dTCC),$$

avec « TCCdesynch » qui représente ledit pas objectif, « TCCcur » qui représente une composante de pas moyen courante du pas des deuxièmes pales (7), « PWrp » qui représente la puissance mécanique consommée par ledit rotor de sustentation (2), « PWlr » qui représente la puissance mécanique mise en oeuvre par ladite au moins une hélice (6), « PWinst » qui représente la puissance mécanique consommée par l'installation motrice (10), « / » représente le signe de la division, « - » représente le signe de la soustraction, « + » représente le signe de l'addition, « = » représente le signe de l'égalité, « dPWlr/dTCC » représente la dérivée de la puissance mécanique consommée par ladite au moins une hélice (6) par rapport à la composante de pas moyen courante du pas des deuxièmes pales (7).

**5.** Procédé selon l'une quelconque des revendications 1 à 4, **caractérisé en ce que**, à l'initiation du premier mode de pilotage de secours (MOD1), une vitesse de rotation des premières pales (3) est maintenue égale à une vitesse de rotation de consigne atteinte avant ladite panne.

**6.** Procédé selon l'une quelconque des revendications 1 à 5, **caractérisé en ce que**, durant le premier mode de pilotage de secours (MOD1), ladite réduction automatique par le système de pilotage automatique (40) du pas desdites deuxièmes pales (7) vers un pas objectif comporte l'étape suivante : asservissement (STP2.3) d'une vitesse de rotation (Nr) du rotor de sustentation (2) à une vitesse de rotation de consigne (Nr*) par le système de pilotage automatique (40) en régulant ledit pas desdites deuxièmes pales (7) .

**7.** Procédé selon l'une quelconque des revendications 1 à 5, **caractérisé en ce que**, durant le premier mode de pilotage de secours (MOD1), ladite réduction automatique par le système de pilotage automatique (40) du pas desdites deuxièmes pales (7) vers un pas objectif comporte les étapes suivantes : calcul du pas objectif et asservissement du pas desdites deuxièmes pales (7) à ce pas objectif.

**8.** Procédé selon l'une quelconque des revendications 1 à 5, **caractérisé en ce que**, durant le premier mode de pilotage de secours (MOD1), ladite réduction automatique par le système de pilotage automatique (40) du pas desdites deuxièmes pales (7) vers un pas objectif comporte les étapes suivantes : calcul du pas objectif et asservissement du pas desdites deuxièmes pales (7) à un pas de consigne égal au pas objectif ajusté en fonction d'une vitesse de rotation (Nr) courante du rotor de sustentation (2) au regard d'une vitesse de rotation de consigne (Nr*).

**9.** Procédé selon l'une quelconque des revendications 1 à 8, **caractérisé en ce que** sous condition que le premier mode de pilotage de secours (MOD1) soit mis en oeuvre, le procédé comporte une étape de sollicitation (STP4) d'une interface homme-machine (42) par un pilote, ladite interface homme-machine (42) émettant un signal de changement de mode transmis au système de pilotage automatique (40), ledit système de pilotage automatique (40) appliquant suite à une réception dudit signal de changement le deuxième mode de pilotage de secours (MOD2) maintenant une composante de pas moyen du pas des deuxièmes pales (7) égale à un pas moyen de poussée nulle (TCCO) lorsque le pas des deuxièmes pales (7) atteint le pas moyen de poussée nulle (TCCO).

**10.** Procédé selon l'une quelconque des revendications 1 à 9, **caractérisé en ce que** sous condition que le premier mode de pilotage de secours (MOD1) soit mis en oeuvre, le procédé comporte les étapes suivantes :

- sollicitation (STP5) d'une commande de pas collectif (20) par un pilote lorsque ladite vitesse d'avancement (TAS) est inférieure ou égale au premier seuil de vitesse (SV1),
- mise en oeuvre par ledit système de pilotage automatique (40) du deuxième mode de pilotage de secours (MOD2) maintenant une composante de pas moyen du pas des deuxièmes pales (7) égale à un pas moyen de poussée nulle (TCCO) lorsque le pas des deuxièmes pales (7) atteint le pas moyen de poussée nulle (TCCO).

11. Procédé selon l'une quelconque des revendications 1 à 10, **caractérisé en ce que**, sous condition que le premier mode de pilotage de secours (MOD1) soit mis en oeuvre, le procédé comporte les étapes (STP6) suivantes : comparaison de ladite vitesse d'avancement (TAS) à un deuxième seuil de vitesse (SV2) qui est inférieur au premier seuil de vitesse (SV1), baisse automatique par le système de pilotage automatique (40) du pas des premières pales (3) et mise en oeuvre par ledit système de pilotage automatique (40) du deuxième mode de pilotage de secours (MOD2) lorsque ladite vitesse d'avancement (TAS) est inférieure au deuxième seuil de vitesse (SV2).

12. Procédé selon l'une quelconque des revendications 1 à 11, **caractérisé en ce que** sous condition que le premier mode de pilotage de secours (MOD1) soit mis en oeuvre, le procédé comporte les étapes suivantes : détection (STP7) d'un redémarrage dudit au moins un moteur (12), suite à ladite détection désengagement automatique par ledit système de pilotage automatique (40) du premier mode de pilotage de secours (MOD1).

13. Procédé selon l'une quelconque des revendications 1 à 12, **caractérisé en ce que** ladite vitesse d'avancement est la vitesse air vraie (TAS) de l'hélicoptère hybride (1).

14. Hélicoptère hybride (1), ledit hélicoptère hybride (1) ayant une installation motrice (10) reliée à au moins un rotor de sustentation (2) et à au moins une hélice (6), ladite installation motrice (10) ayant au moins un moteur (12), ledit rotor de sustentation (2) ayant une pluralité de premières pales (3) et ladite au moins une hélice (6) ayant une pluralité de deuxièmes pales (7),
**caractérisé en ce que** ledit hélicoptère hybride (1) comporte un senseur de vitesse (15) pour mesurer une vitesse d'avancement (TAS) de l'hélicoptère hybride (1) et un système de pilotage automatique (40) relié au senseur de vitesse (15), ledit système de pilotage automatique (40) étant configuré pour appliquer le procédé selon l'une quelconque des revendications 1 à 13.


**Patentansprüche**

1. Verfahren zum Steuern eines Hybridhubschraubers (1), wobei der Hybridhubschrauber (1) eine Triebwerksanlage (10) aufweist, die mit mindestens einem Auftriebsrotor (2) und mit mindestens einem Propeller (6) verbunden ist, wobei die Triebwerksanlage (10) mindestens einen Motor (12) hat, der Auftriebsrotor (2) eine Mehrzahl von ersten Blättern (3) hat und der mindestens eine Propeller (6) eine Mehrzahl von zweiten Blättern (7) hat,

**dadurch gekennzeichnet, dass** das Verfahren die folgenden Schritte umfasst:

- Messen (STP1.1) einer Vorwärtsgeschwindigkeit (TAS) des Hybridhubschraubers (1),
- unter der Bedingung (STP1.3), dass die Vorwärtsgeschwindigkeit (TAS) größer ist als ein erster Geschwindigkeitsschwellenwert (SV1) und dass jeder Motor des mindestens einen Motors (12) gestört ist, automatisches Ausführen (STP2) eines ersten Notsteuerungsmodus (MOD1), der einen Schritt des automatischen Reduzierens (STP2.1), durch ein automatisches Steuerungssystem (40), einer Steigung der zweiten Blätter (7) bis zu einer Zielsteigung umfasst, die den mindestens einen Propeller (6) zum Erzeuger einer Antriebskraft macht, die auf den Auftriebsrotor (2) übertragen wird,

und dass unter der Bedingung, dass die Vorwärtsgeschwindigkeit (TAS) kleiner oder gleich dem ersten Geschwindigkeitsschwellenwert (SV1) ist und dass jeder Motor des mindestens einen Motors (12) gestört ist, automatisch ein zweiter Notsteuerungsmodus (MOD2) mit den folgenden Schritten ausgeführt wird (STP3):

- Automatisches Einstellen (STP3.1), durch das automatische Steuerungssystem (40), einer mittleren Steigungskomponente (TCC) der Steigung der zweiten Blätter (7) auf eine mittlere Steigung mit Nullschub (TCCO), wobei mittlere Steigung mit Nullschub (TCCO) durch das automatische Steuerungssystem (40) so berechnet wird, dass der mindestens eine Propeller (6) keinen Schub ausübt, wenn kein Befehl zur Gierbewegung vorliegt.

**2.** Verfahren nach Anspruch 1,
**dadurch gekennzeichnet, dass** während des ersten Notsteuerungsmodus (MOD1) das automatische Steuerungssystem (40) einen Wert für die Zielsteigung bestimmt, der eine Summe aus einer mechanischen Leistung (PWlr), die von dem mindestens einen Propeller erbracht wird, sowie aus einer mechanischen Leistung (PWrp), die von dem Auftriebsrotor (2) verbraucht wird, und aus einer mechanischen Leistung (PWinst), die von der Triebwerksanlage (10) verbraucht wird, zu Null macht.

**3.** Verfahren nach Anspruch 2,
**dadurch gekennzeichnet, dass** die von der Triebwerksanlage verbrauchte mechanische Leistung (PWinst) gleich der Summe aus einer mechanischen Leistung (PWprt), die aus Anlagenverlusten resultiert, und einer mechanischen Leistung (PWcons) ist, die von mindestens einem Zubehörteil (16) der Triebwerksanlage (10) verbraucht wird.

**4.** Verfahren nach einem der Ansprüche 1 bis 3,
**dadurch gekennzeichnet, dass** das Verfahren das Bestimmen der Zielsteigung durch das automatische Steuerungssystem (40) durch Lösen der folgenden Gleichung umfasst:

TCCdesynch=TCCcur-[(PWrp+PWlr+PWinst) / (dPWlr / dTCC), wobei "TCCdesynch" die Zielsteigung darstellt, "TCCcur" eine laufende mittlere Steigungskomponente der Steigung der zweiten Blätter (7) darstellt, "PWrp" die mechanische Leistung darstellt, die von dem Auftriebsrotor (2) verbraucht wird, "PWlr" die mechanische Leistung darstellt, die von dem mindestens einen Propeller (6) erbracht wird, "PWinst" die mechanische Leistung darstellt, die von der Triebwerksanlage (10) verbraucht wird, "/" das Zeichen für Division, "-" das Zeichen für Subtraktion, "+" das Zeichen für Addition, "=" das Zeichen für Gleichheit,
"dPWlr/dTCC" die Ableitung der von dem mindestens einen Propeller (6) verbrauchten mechanischen Leistung in Bezug auf die laufende mittlere Steigungskomponente der Steigung der zweiten Blätter (7) darstellt.

**5.** Verfahren nach einem der Ansprüche 1 bis 4,
**dadurch gekennzeichnet, dass** bei Einleitung des ersten Notsteuerungsmodus (MOD1) eine Drehzahl der ersten Blätter (3) gleich einer vor der Störung erreichten Solldrehzahl gehalten wird.

**6.** Verfahren nach einem der Ansprüche 1 bis 5,
**dadurch gekennzeichnet, dass** während des ersten Notsteuerungsmodus (MOD1) das automatische Reduzieren der Steigung der zweiten Blätter (7) auf eine Zielsteigung durch das automatische Steuerungssystem (40) den folgenden Schritt umfasst: Regeln (STP2.3) einer Drehgeschwindigkeit (Nr) des Auftriebsrotors (2) auf eine Solldrehgeschwindigkeit (Nr*) durch das automatische Steuerungssystem (40), indem die Steigung der zweiten Blätter (7) reguliert wird.

**7.** Verfahren nach einem der Ansprüche 1 bis 5,
**dadurch gekennzeichnet, dass** während des ersten Notsteuerungsmodus (MOD1) das automatische Reduzieren der Steigung der zweiten Blätter (7) auf eine Zielsteigung durch das automatische Steuerungssystem (40) die folgenden Schritte umfasst: Berechnen der Zielsteigung und Regeln der Steigung der zweiten Blätter (7) auf diese Zielsteigung.

**8.** Verfahren nach einem der Ansprüche 1 bis 5,
**dadurch gekennzeichnet, dass** während des ersten Notsteuerungsmodus (MOD1) das automatische Reduzieren der Steigung der zweiten Blätter (7) auf eine Zielsteigung durch das automatische Steuerungssystem (40) die folgenden Schritte umfasst: Berechnen der Zielsteigung und Regeln der Steigung der zweiten Blätter (7) auf eine Sollsteigung, die gleich der in Abhängigkeit von einer aktuellen Drehgeschwindigkeit (Nr) des Auftriebsrotors (2) im Hinblick auf eine Solldrehgeschwindigkeit (Nr*) angepassten Zielsteigung ist.

**9.** Verfahren nach einem der Ansprüche 1 bis 8,
**dadurch gekennzeichnet, dass** unter der Bedingung, dass der erste Notsteuerungsmodus (MOD1) ausgeführt wird, das Verfahren einen Schritt des Bedienens (STP4) einer Mensch-Maschine-Schnittstelle (42) durch einen Piloten umfasst, wobei die Mensch-Maschine-Schnittstelle (42) ein Moduswechselsignal ausgibt, das an das automatische Steuerungssystem (40) übertragen wird, das automatische Steuerungssystem (40) nach einem Empfang des Wechselsignals den zweiten Notsteuerungsmodus (MOD2) ausführt, der eine mittlere Steigungskomponente der Steigung der zweiten Blätter (7) gleich einer mittleren Steigung mit Nullschub (TCCO) aufrechterhält, wenn die Steigung der zweiten Blätter (7) die mittlere Steigung mit Nullschub (TCCO) erreicht.

**10.** Verfahren nach einem der Ansprüche 1 bis 9,
**dadurch gekennzeichnet, dass** unter der Bedingung, dass der erste Notsteuerungsmodus (MOD1) ausgeführt wird, das Verfahren die folgenden Schritte umfasst:

- Bedienen (STP5) einer Kollektivsteigungssteuerung (20) durch einen Piloten, wenn die Vorwärtsgeschwindigkeit (TAS) kleiner oder gleich dem ersten Geschwindigkeitsschwellenwert (SV1) ist,
- Ausführen des zweiten Notsteuerungsmodus (MOD2) durch das automatische Steuerungssystem (40), der eine mittlere Steigungskomponente der Steigung der zweiten Blätter (7) gleich einer mittleren Steigung bei Nullschub (TCCO) aufrechterhält, wenn die Steigung der zweiten Blätter (7) die mittlere Steigung mit Nullschub (TCCO) erreicht.

**11.** Verfahren nach einem der Ansprüche 1 bis 10,
**dadurch gekennzeichnet, dass** unter der Bedingung, dass der erste Notsteuerungsmodus (MOD1) ausgeführt wird, das Verfahren die folgenden Schritte (STP6) umfasst: Vergleichen der Vorwärtsgeschwindigkeit (TAS) mit einem zweiten Geschwindigkeitsschwellenwert (SV2), der niedriger ist als der erste Geschwindigkeitsschwellenwert (SV1), automatisches Reduzieren der Steigung der ersten Blätter (3) durch das automatische Steuerungssystem (40) und Ausführen des zweiten Notsteuerungsmodus (MOD2) durch das automatische Steuerungssystem (40), wenn die Vorwärtsgeschwindigkeit (TAS) niedriger ist als der zweite Geschwindigkeitsschwellenwert (SV2).

**12.** Verfahren nach einem der Ansprüche 1 bis 11,
**dadurch gekennzeichnet, dass** unter der Bedingung, dass der erste Notsteuerungsmodus (MOD1) ausgeführt wird, das Verfahren die folgenden Schritte umfasst: Erkennen (STP7) eines Neustarts des mindestens einen Motors (12), nach diesem Erkennen automatisches Aufheben des ersten Notsteuerungsmodus (MOD1) durch das automatische Steuerungssystem (40).

**13.** Verfahren nach einem der Ansprüche 1 bis 12,
**dadurch gekennzeichnet, dass** die Vorwärtsgeschwindigkeit die wahre Luftgeschwindigkeit (TAS) des Hybridhubschraubers (1) ist.

**14.** Hybridhubschrauber (1), wobei der Hybridhubschrauber (1) eine Triebwerksanlage (10) aufweist, die mit mindestens einem Auftriebsrotor (2) und mindestens einem Propeller (6) verbunden ist, wobei die Triebwerksanlage (10) mindestens einen Motor (12) aufweist, wobei der Auftriebsrotor (2) eine Mehrzahl von ersten Blättern (3) aufweist und der mindestens eine Propeller (6) eine Mehrzahl von zweiten Blättern (7) aufweist,
**dadurch gekennzeichnet, dass** der Hybridhubschrauber (1) einen Geschwindigkeitssensor (15) zum Messen einer Vorwärtsgeschwindigkeit (TAS) des Hybridhubschraubers (1) und ein automatisches Steuerungssystem (40) aufweist, das mit dem Geschwindigkeitssensor (15) verbunden ist, wobei das automatische Steuerungssystem (40) konfiguriert ist, um das Verfahren nach einem der Ansprüche 1 bis 13 auszuführen.

**Claims**

**1.** Method for controlling a hybrid helicopter (1), the hybrid helicopter (1) having a motor installation (10) connected to at least one lifting rotor (2) and to at least one propeller (6), the motor installation (10) having at least one motor (12), the lifting rotor (2) having a plurality of first blades (3) and the at least one propeller (6) having a plurality of second blades (7),

**characterised in that** the method consists of the following stages: measurement (STP1.1) of forward speed (TAS) of the hybrid helicopter (1),

- provided (STP1.3) that the forward speed (TAS) is greater than a first speed threshold (SV1) and that each of the at least one motor (12) fails, automatic implementation (STP2) of a first emergency piloting mode (MOD1) comprising an automatic reduction stage (STP2.1) by an automatic piloting system (40) one pitch from the second blades (7) to an objective pitch that allows the at least one propeller (6) to produce motor power that is transmitted to the lifting rotor (2),

and **in that** provided that the forward speed (TAS) is equal to or below the first speed threshold (SV1) and that each of the at least one motor (12) fails, automatic implementation (STP3) of a second emergency piloting mode (MOD2) comprising the following stages:

- automatic adjustment (STP3.1) by the automatic piloting system (40) of a component (TCC) of the average pitch of the pitch of the second blades (7) to an zero thrust average pitch (TCCO), the zero thrust average pitch (TCCO) being calculated by the automatic piloting system (40) so that at least one propeller (6) exerts no thrust in the absence of a yaw command.

2. Method according to Claim 1, **characterised in that** during the first emergency piloting mode (MOD1), the automatic piloting system (40) determines an objective pitch value that sets to zero a sum of mechanical power (PWIr) applied by the at least one propeller as well as the mechanical power (PWrp) consumed by the lifting rotor (2) and a mechanical power (PWinst) consumed by the motor installation (10).

3. Method according to Claim 2, **characterised in that** the mechanical power (PWinst) consumed by the motor installation is equal to the sum of the mechanical power (PWprt) arising from a loss of facility and of the mechanical power (PWcons) consumed by at least one accessory (16) of the motor installation (10).

4. Method according to any of Claims 1 to 3, **characterised in that** the method includes determination by the automatic piloting system (40) of the objective pitch by solving the following equation: TCCdesynch=TCCcur-[(PWrp + PWIr+PWinst)/(dPWIr/dTCC), where "TCCdesynch" represents the objective pitch, "TCCcur" represents a current average pitch component of the pitch of the second blades (7), "PWrp" represents the mechanical power consumed by the lifting rotor (2), "PWIr" represents the mechanical power applied by the at least one propeller (6), "PWinst" represents the mechanical power consumed by the motor installation (10), "/" represents the division sign, "-" represents the subtraction sign, "+" represents the addition sign, "=" represents the equals sign, "dPWIr/dTCC" represents the derivative of the mechanical power consumed by the at least one propeller (6) in relation to the current average pitch component of the pitch of the second blades (7).

5. Method according to any of Claims 1 to 4, **characterised in that** at the initiation of the first emergency piloting mode (MOD1), a rotation speed of the first blades (3) is maintained equal to a set rotation speed reached before the failure.

6. Method according to any of Claims 1 to 5, **characterised in that** during the first emergency piloting mode (MOD1), the automatic reduction by the automatic piloting system (40) of the pitch of the second blades (7) to an objective pitch includes the following stage: subjugation (STP2.3) of a rotation speed (Nr) of the lifting rotor (2) to a set rotation speed (Nr*) by the automatic piloting system (40) by regulating the pitch of the second blades (7) .

7. Method according to any of Claims 1 to 5, **characterised in that** during the first emergency piloting mode (MOD1), the automatic reduction by the automatic piloting system (40) of the pitch of the second blades (7) to an objective pitch includes the following stages: calculation of the objective pitch and subjugation of the pitch of the second blades (7) to this objective pitch.

8. Method according to any of Claims 1 to 5, **characterised in that** during the first emergency piloting mode (MOD1), the automatic reduction by the automatic piloting system (40) of the pitch of the second blades (7) to an objective pitch includes the following stages: calculation of the objective pitch and subjugation of the pitch of the second blades (7) to a set pitch equal to the objective pitch adjusted according to the current rotation speed (Nr) of the lifting rotor (2) with regard to a set rotation speed (Nr*).

9. Method according to any of Claims 1 to 8, **characterised in that** provided that the first emergency piloting mode (MOD1) is implemented, the method includes a stage of calling (STP4) on a man-machine interface (42) by a pilot, the man-machine interface (42) emitting a mode change signal sent to the automatic piloting system (40), the automatic piloting system (40) applying the second emergency piloting mode (MOD2) following reception of the change signal, maintaining an average pitch component of the pitch of the second blades (7) equal to a zero thrust average pitch (TCCO) when the pitch of the second blades (7) reaches the zero thrust average pitch (TCCO).

10. Method according to any of Claims 1 to 9, **characterised in that**, provided that the first emergency piloting mode (MOD1) is implemented, the method includes the following stages:

- Calling (STP5) on a collective pitch command (20) by a pilot when the forward speed (TAS) is equal to or less than the first speed threshold (SV1),
- Implementation by the automatic piloting system (40) of the second emergency piloting mode (MOD2) maintaining an average pitch component of the pitch of the second blades (7) equal to a zero thrust average pitch (TCCO) when the pitch of the second blades (7) reaches the zero thrust average pitch (TCCO).

**11.** Method according to any of Claims 1 to 10,

**characterised in that**, provided that the first emergency piloting mode (MOD1) is implemented, the method includes the following stages (STP6): comparison of the forward speed (TAS) with a second speed threshold (SV2) that is less than the first speed threshold (SV1), automatic lowering by the automatic piloting system (40) of the pitch of the first blades (3) and implementation by the automatic piloting system (40) of the second emergency piloting mode (MOD2) when the forward speed (TAS) is less than the second speed threshold (SV2).

**12.** Method according to any of Claims 1 to 11,

**characterised in that**, provided that the first emergency piloting mode (MOD1) is implemented, the method includes the following stages: detection (STP7) of a restart of the at least one motor (12), following the detection automatic disengagement by the automatic piloting system (40) of the first emergency piloting mode (MOD1).

**13.** Method according to any of Claims 1 to 12,
**characterised in that** the forward speed is the true air speed (TAS) of the hybrid helicopter (1).

**14.** Hybrid helicopter (1), the hybrid helicopter (1) having

a motor installation (10) linked to at least one lifting rotor (2) and to at least one propeller (6), the motor installation (10) having at least one motor (12), the lifting rotor (2) having a plurality of first blades (3) and the at least one propeller (6) having a plurality of second blades (7),
**characterised in that** the hybrid helicopter (1) includes a speed sensor (15) for measuring the forward speed (TAS) of the hybrid helicopter (1) and an automatic piloting system (40) linked to the speed sensor (15), the automatic piloting system (40) being configured to apply the method according to any one of Claims 1 to 13.

Fig.1

Fig.2

EP 3 868 658 B1

Fig.3

Fig.4

Fig.5

Fig.6

Fig.7

Fig.8

**EP 3 868 658 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2946315
- US 20160083076 A
- EP 3201085 A
- US 3540680 A
- US 2006269413 A
- EP 2148066 A